# FASCICULE DE BREVET EUROPEEN

(11) **EP 1 270 972 B1**
(45) Date de publication et mention de la délivrance du brevet: **25.08.2004**
(21) Numéro de dépôt: 01440187.1
(22) Date de dépôt: 21.06.2001
(51) Int. Cl.: F16C 29/04, A47B 9/20

(54) **Système de guidage télescopique d'un tube interne dans une enveloppe tubulaire externe**
Teleskopische Führungseinrichtung eines inneren Rohres in einer äusseren rohrförmigen Umhüllung
Telescopic guide system of an inner tube in an outer tubular envelope

(43) Date de publication de la demande: 02.01.2003
(73) Titulaire: STEELCASE SA, 67200 Strasbourg (FR)
(72) Inventeur: Lerat, Pascal, 67200 Strasbourg (FR)
(74) Mandataire: Littolff, Denis

(56) Documents cités:
- DE-A- 2 656 822
- DE-A- 3 124 927
- DE-A- 3 813 422
- DE-A- 19 623 437
- US-A- 3 887 155

## Description

La présente invention concerne un système de guidage télescopique d'un tube interne dans une enveloppe tubulaire externe, ledit système reposant essentiellement sur des guidages par des rangées de billes disposées entre la périphérie extérieure du tube interne et la périphérie intérieure ou l'aménagement intérieur de l'enveloppe externe.

Pour que le guidage puisse avoir lieu dans de bonnes conditions, c'est-à-dire qu'il n'y ait pas de jeu entre le tube interne et l'enveloppe externe, une attention toute particulière était donnée, dans les solutions antérieures utilisant ce principe, par ailleurs connu depuis fort longtemps, au choix des billes.

Les tolérances de dimensionnement, autant pour l'enveloppe externe que pour le tube interne n'étant par définition pas très précise, car ils sont en général fabriqués à l'aide de tôle pliée ou de tubes, la sélection minutieuse des billes devait a contrario pallier le manque de précision de ceux-ci. Cette sélection se faisait en général manuellement, le calibre de chaque bille étant alors choisi individuellement en fonction du couple enveloppe externe / tube interne à équiper.

Le montage manuel résultant conduisait à allonger sensiblement la durée de fabrication, d'une manière peu compatible avec les impératifs économiques qui s'attachent de nos jours à ce type de production. La sélection purement manuelle de chaque bille à introduire entre le tube interne et l'enveloppe tubulaire externe pouvait de plus conduire à des imprécisions résultant d'erreurs humaines toujours possibles, notamment du fait de la nature des pièces à assembler, peu propices à une évaluation précise des calibres appropriés.

Pour améliorer le procédé de montage et le rendre plus adapté aux impératifs industriels, il a été proposé une solution s'affranchissant de ces préoccupations, et permettant de supprimer le choix individuel des billes pour s'adapter aux dimensions respectives des tubes internes et externes.

Cette solution est décrite notamment dans le brevet DE 196 23 437, qui s'applique à des dispositifs de guidage faisant intervenir une tubulure externe polygonale, dans laquelle coulisse une tubulure interne de section présentant notamment des portions convexes, les billes de roulement étant dimensionnées de telle sorte que, lors de leur course relative sur la surface externe de la tubulure interne, cette dernière subit une déformation plastique.

En d'autres termes, lors d'un mouvement de coulissement, les billes forment leur propre trajet de guidage longitudinal, en "creusant" une rainure suivant l'axe de coulissement.

Cette solution permet d'accélérer considérablement la fabrication des systèmes de guidage, puisqu'il n'est plus question de sélection individuelle de chaque bille en fonction des dimensions respectives des deux tubes qui coulissent l'un dans l'autre. Les billes sont en effet toutes de dimensions supérieures au volume de roulement qui leur est en principe dévolu entre les tubulures interne et externe.

L'avantage économique résultant de cette solution est évident, car il conduit notamment à une production industrialisée beaucoup moins onéreuse que lorsque la solution traditionnelle est mise en oeuvre.

La présente invention s'affranchit également de toute étape manuelle de sélection, et conduit à un procédé de montage industriellement aussi avantageux que le précédent, en utilisant une solution qui ne nécessite au surplus pas de déformation plastique de l'élément tubulaire interne.

Dans l'invention, les éléments principaux du système de guidage, à savoir l'enveloppe tubulaire externe, le tube interne et les billes de roulement ne nécessitent par conséquent aucune déformation, le nécessaire rattrapage du jeu étant pris en charge par un composant du système qui leur est distinct.

De plus, par rapport au système faisant l'objet du document DE 196 23 437, l'invention accepte de plus grandes tolérances pour les pièces qui la composent, sans que les efforts d'assemblage ne soient augmentés.

Le système de l'invention, permettant comme déjà mentionné le guidage télescopique d'un tube interne dans une enveloppe tubulaire externe, comporte également des rangées de billes disposées dans au moins une cage parallèlement à l'axe du coulissement, lesdites rangées exerçant des actions antagonistes par groupement en n paires traversées par un même plan médian vertical passant par l'axe de coulissement. Ces billes sont de plus aussi prévues pour rouler entre la paroi externe du tube interne et deux parois planes en regard situées du côté de l'enveloppe externe, lesdites parois définissant ensemble un conduit de roulement.

L'existence d'un revêtement élastique, qui supprime la nécessité de déformer les éléments tubulaires, est décrit dans le document DE-2656822 A dans une configuration dans laquelle les zones de la paroi externe du tube interne et les zones de la paroi interne de l'enveloppe tubulaire externe qui sont en contact avec les billes sont revêtues chacune d'une couche en matériau élastique absorbant.

Dans l'exemple illustré, les sections des tubes interne et externe sont d'allure rectangulaire, et les zones à revêtir sont alors au nombre de huit (8).

Le document DE-3124927, divulguant un dispositif de couplage d'arbres fonctionnant de manière rotative, montre une configuration dans laquelle les billes sont maintenues en place par des plaques externes qui sont sollicitées vers les billes à l'aide de ressorts disposés dans des cavités pratiquées à l'intérieur de l'enveloppe externe.

Ces plaques et leurs moyens de rappel couvrent la totalité de la périphérie de l'enveloppe externe car elles participent à la définition des conduits de guidage des billes.

A l'inverse, le système de l'invention se caractérise à titre essentiel en ce que l'une des deux parois, coopérant avec n rangées de billes adjacentes issues de paires distinctes, appartient à une pièce dont au moins une portion est en matériau élastique, ladite pièce étant solidaire de l'enveloppe tubulaire externe et le matériau élastique pressant lesdites n rangées de billes vers le tube interne.

Le rattrapage du jeu est donc dans ce cas effectué par une pièce additionnelle présentant un comportement élastique, dont les propriétés mécaniques permettent d'absorber le surdimensionnement des billes destinées à éviter les jeux.

Selon la forme de l'enveloppe tubulaire externe, il y aura lieu de prévoir une pièce de forme complexe, l'approche industrielle conduisant cependant généralement à simplifier et à n'utiliser qu'une pièce de forme simple.

Selon une possibilité, le volume intérieur constitué par ladite enveloppe et la pièce élastique peut pour cette raison prendre la forme d'un polygone, les rangées de billes se situant alors aux angles dudit polygone. Les billes roulent ainsi entre trois parois définissant leur conduit de roulement.

Dans ce cas, la pièce élastique peut être constituée d'un plastique, dont au moins la surface sur laquelle s'appuient les billes est en élastomère. Ce matériau s'avère en effet bien adapté, c'est-à-dire suffisamment dur pour offrir une résistance suffisante aux billes lorsqu'elles roulent sur sa surface, et suffisamment élastique pour absorber le jeu résiduel né du surdimensionnement desdites billes.

Alternativement, la pièce élastique peut prendre la forme d'une lame ressort élastique, par exemple en acier ressort voire d'un organe non élastique couplé à une plaque élastique par exemple en élastomère.

Par ailleurs, selon une configuration possible utilisée à titre préférentiel dans la plupart des structures, la cage comporte quatre rangées axiales de billes disposées au contact du tube interne. Celui-ci peut, selon une possibilité, prendre une configuration géométrique d'allure ovale.

Ladite plaque élastique épouse de préférence une portion du volume enclos par l'enveloppe tubulaire externe, créant une sorte de surépaisseur interne diminuant le volume intérieur dans lequel se meut le tube interne, cette surépaisseur se chargeant de la fonction de rattrapage du jeu prise dans l'art antérieur par les rainures pratiquées dans le tube interne.

Selon une variante possible, l'enveloppe tubulaire externe pourrait comprendre deux plaques opposées d'allure parallèle, ayant chacune la même fonction. Pour simplifier le montage, à des fins d'industrialisation, on utilise de préférence une seule plaque, le matériau choisi ayant alors des propriétés mécaniques suffisantes pour absorber dans de bonnes conditions la totalité du jeu résiduel.

La présente invention peut être utilisée dans de multiples applications dans lesquelles un système de guidage télescopique d'un tube interne par rapport à un tube externe est requis.

A titre d'exemple, le domaine du mobilier, et plus particulièrement du mobilier de bureau comporte un certain nombre de structures usuelles dans lesquelles un tel système de guidage peut être avantageusement utilisé. Ainsi en est-il des bureaux à hauteur réglable, qui utilisent des piétements par conséquent réglables, supportant un plan de travail dont la hauteur par rapport au sol peut être ajustée par action sur lesdits piétements. Un tel réglage peut être effectué manuellement, ou être motorisé aux fins d'automatisation, selon la gamme de bureaux proposée, les solutions utilisées pour la motorisation étant connues.

Le système de guidage télescopique de l'invention peut également être utilisé dans tout type d'application nécessitant une colonne réglable en hauteur, du type pupitre, support d'élément informatique, etc...

L'invention va à présent être décrite plus en détail, en référence aux figures annexées, pour lesquelles :
- la figure 1 est une vue en perspective d'un piétement de bureau muni d'un système de guidage selon la présente invention ;
- la figure 2 est une vue latérale en transparence de la configuration de la figure 1 ;
- les figures 3 et 4 représentent une coupe transversale d'un piétement selon la présente invention, la pièce élastique étant une plaque en élastomère ;
- la figure 5 montre également une coupe transversale d'un piétement, la pièce élastique étant dans ce cas une lame ressort ; et
- la figure 6 représente une combinaison possible des solutions montrées aux figures précédentes.

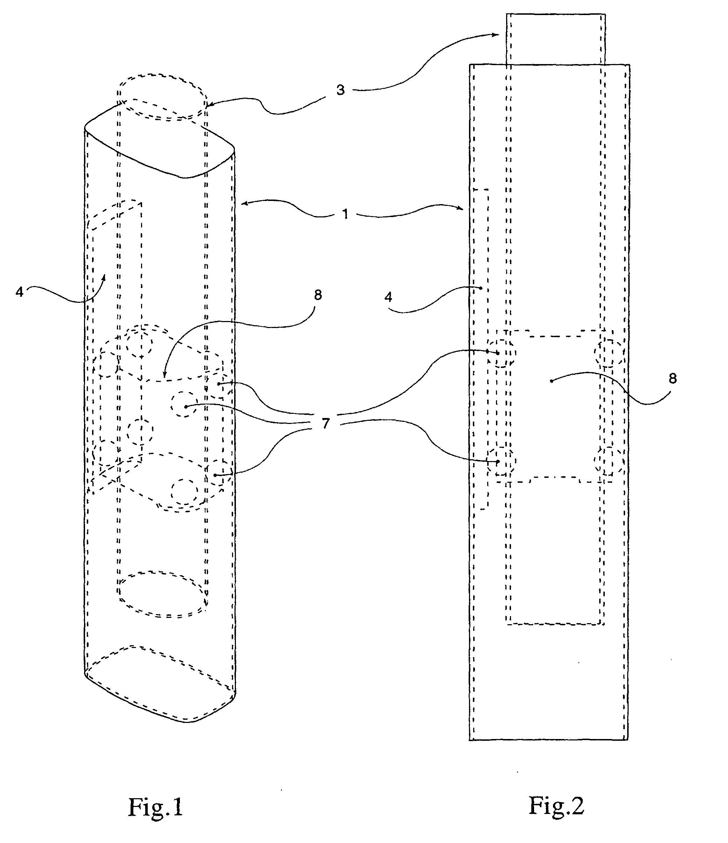

En référence à la figure 1, le piétement comporte une enveloppe tubulaire externe (1) dans laquelle est guidé un tube interne (3), à l'aide de billes (7) notamment maintenues par une cage (8). Dans la configuration montrée en figure 1, la pièce présentant des propriétés élastiques permettant des rattraper le jeu consiste en une plaque (4), par exemple en matériau élastomère, fixée à l'enveloppe externe (1) et sur laquelle la moitié des billes (7) de la cage (8) roule.

Les autres billes (7) sont directement en contact avec la paroi interne de ladite enveloppe tubulaire externe (1). La figure 2 représente les mêmes éléments sous un angle différent rendant encore plus explicite la fonction de la plaque (4) en terme d'absorption du jeu.

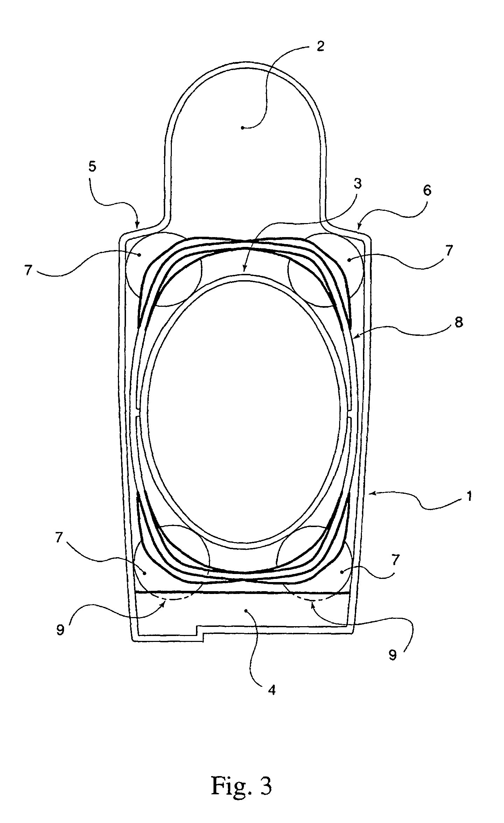

En référence à la figure 3, représentant un piétement de bureau en section transversale, l'enveloppe tubulaire externe (1) délimite un premier volume d'allure sensiblement rectangulaire prolongé par une portion en forme de colonne (2) dépassant d'un petit côté. Le tube interne (3) est d'allure ovale, disposé à l'intérieur de la portion principale d'allure rectangulaire de l'enveloppe externe (1).

Une plaque (4) en matériau élastique occupe le petit côté opposé à celui à partir duquel se développe la colonne (2). Cette plaque (4) épouse la forme intérieure délimitée par l'enveloppe tubulaire externe (1) dans cette zone, et elle aboutit à décaler la paroi interne vers l'intérieur du volume clos délimité par ladite enveloppe (1).

Si l'on fait abstraction du volume particulier constitué de la partie en forme de colonne (2), le tube interne (3) est centré, à la pénétration de la bille près, à l'intérieur du volume intérieur d'allure rectangulaire défini entre les deux épaulements (5, 6) et la face interne de la plaque (4). Les quatre coins de ce volume sont occupés par des billes (7) maintenues par une cage (8) en plastique. Ces billes (7) sont disposées en rangées parallèles à l'axe du coulissement, en l'occurrence perpendiculaires au plan du dessin.

Comme indiqué auparavant, pour éviter tout jeu dans un plan perpendiculaire à l'axe dudit coulissement, les billes sont choisies de telle sorte que leur dimensions soient telles que l'espace qu'elles occupent, en combinaison avec les dimensions du tube intérieur (3), ne permettent pas une occupation du volume intérieur réel tel que précédemment défini, c'est-à-dire incluant la plaque élastique (4), que par insertion forcée. Dans ce cas, une déformation plastique de ladite plaque (4) se produit, symbolisée par les portions des billes (7) dessinées en pointillés au niveau de leur domaine d'intersection (9) avec le volume de la plaque (4).

Cette dernière est réalisée en un matériau sélectionné pour ses propriétés élastiques, dont l'épaisseur est notamment choisie pour permettre d'absorber le jeu résiduel dû au surdimensionnement des billes (7). La totalité du jeu est ainsi absorbée, sans qu'il soit nécessaire de procéder à une déformation du tube intérieur (3).

L'usure due à un fonctionnement répété peut néanmoins entraîner l'existence d'une trace au niveau de la zone de roulement des billes (7) sur ledit tube intérieur (3). Cette usure provient de la différence de dureté entre les métaux utilisés pour les billes (7) d'une part, et ledit tube (3) d'autre part. Elle n'est néanmoins pas recherchée dans le cadre de l'invention, dans laquelle elle est au surplus fonctionnellement inutile, puisque la totalité du jeu est absorbée par la plaque élastique (4).

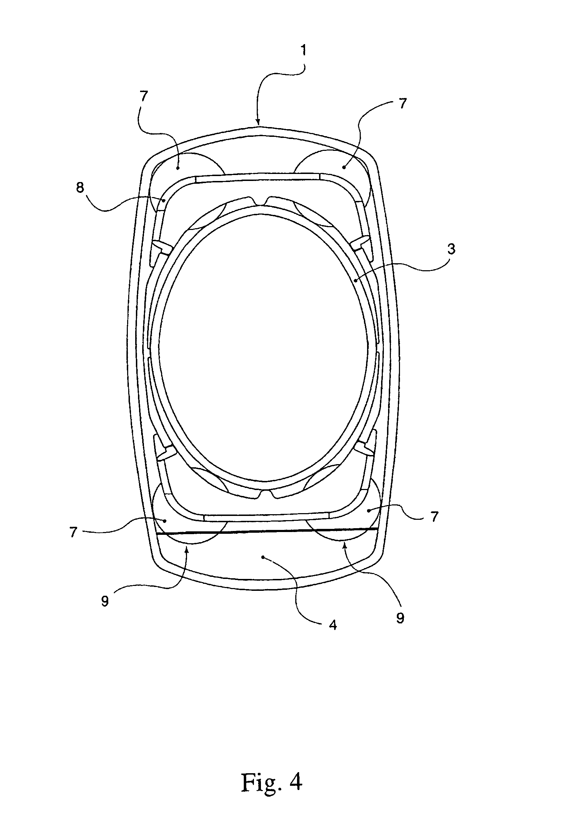

La figure 4 montre une configuration également basée sur une plaque élastique (4), la géométrie de l'enveloppe tubulaire externe (1) étant cependant légèrement différente de celle de la version précédente, et correspondant à la configuration des figures 1 et 2.

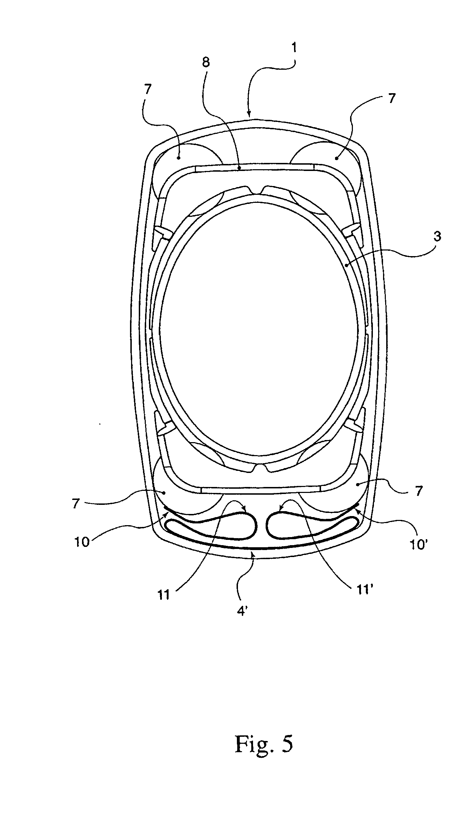

En référence à la figure 5, la pièce élastique (4') est constituée d'un profilé en acier ressort, dont les extrémités (10, 10') forment des surfaces planes sur lesquelles les billes sont en appui. Ces extrémités (10, 10') prolongent des boucles (11, 11') qui procurent l'effet élastique à la pièce, combinées aux propriétés intrinsèquement élastiques du matériau utilisé.

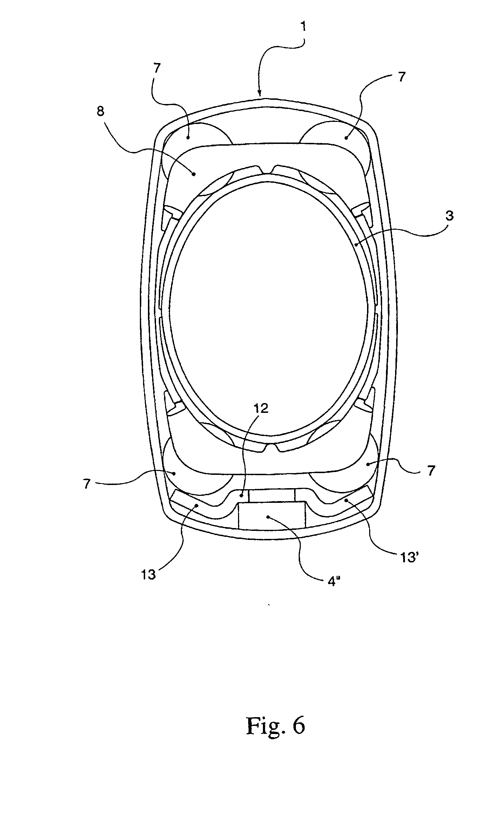

La figure 6 propose une solution dans laquelle une pièce (12) non élastique s'appuie sur une plaque (4") en matériau ayant sensiblement les mêmes propriétés que celui qui est utilisé pour la solution de la figure 1, par exemple également en élastomère. Le déplacement des ailes latérales (13, 13') de la pièce dure (12) résulte alors des propriétés élastiques de la plaque (4").

L'invention telle qu'illustrée par les figures ne représente cependant que quelques exemples qui n'en sont nullement exhaustifs. Au contraire, ladite invention englobe les variantes de formes et de configurations qui sont à la portée de l'homme de l'art.

## Revendications

1. Système de guidage télescopique d'un tube interne (3) dans une enveloppe tubulaire externe (1), comportant des rangées de billes (7) disposées dans au moins une cage (8) parallèlement à l'axe du coulissement, lesdites rangées exerçant des actions antagonistes par groupement en n paires traversées par un même plan médian vertical passant par l'axe de coulissement, lesdites billes (7) pouvant rouler sur la paroi externe du tube interne (3) et sur deux parois en regard situées du côté de l'enveloppe externe (1), lesdites parois définissant ensemble un conduit de roulement, **caractérisé en ce qu'**une des deux parois, coopérant avec n rangées de billes (7) adjacentes issues de paires distinctes, appartient à une pièce (4, 4', 4") dont au moins une portion est en matériau élastique, ladite pièce (4, 4', 4") étant solidaire de l'enveloppe tubulaire externe (1) et le matériau élastique pressant lesdites n rangées de billes vers le tube interne (3).

2. Système de guidage télescopique d'un tube interne (3) dans une enveloppe tubulaire externe (1) selon la revendication précédente, **caractérisé en ce que** la pièce élastique est une plaque élastomère (4).

3. Système de guidage télescopique d'un tube interne (3) dans une enveloppe tubulaire externe (1) selon la revendication 1, **caractérisé en ce que** la pièce est un profilé (4') à lames ressorts (10, 10') au contact desquelles sont disposées les billes (7).

4. Système de guidage télescopique d'un tube interne (3) dans une enveloppe tubulaire externe (1) selon la revendication 3, **caractérisé en ce que** le profilé (4') est en acier ressort.

5. Système de guidage télescopique d'un tube interne (3) dans une enveloppe tubulaire externe (1) selon la revendication 1, **caractérisé en ce que** ladite pièce comporte un organe (12) non élastique d'appui pour les billes coopérant avec une plaque élastique (4") placée au contact de l'enveloppe tubulaire externe (1).

6. Système de guidage télescopique d'un tube interne (3) dans une enveloppe tubulaire externe (1) selon la revendication 5, **caractérisé en ce que** la plaque élastique (4) est en élastomère.

7. Système de guidage télescopique d'un tube interne (3) dans une enveloppe tubulaire externe (1) selon l'une des revendications précédentes, **caractérisé en ce que** la cage (8) comporte quatre rangées axiales de billes (7) disposées au contact du tube interne (3).

8. Système de guidage télescopique d'un tube interne (3) dans une enveloppe tubulaire externe (1) selon l'une des revendications précédentes, **caractérisé en ce que** le tube interne (3) est d'allure ovale.

9. Utilisation d'un système de guidage selon les revendications précédentes à un piétement d'un mobilier de type table.

## Patentansprüche

1. System zur teleskopischen Führung eines Innenrohrs (3) in einer äußeren röhrenförmigen Hülle (1), mit Reihen von Kugeln (7), die in wenigstens einem Käfig (8) parallel zur Gleitachse angeordnet sind, wobei die Reihen durch Gruppierung in n Paare, durch die eine durch die Gleitachse verlaufende vertikale Medianebene verläuft, entgegengesetzte Wirkungen ausüben, wobei die Kugeln (7) auf der Außenwand des Innenrohrs (3) und auf zwei gegenüberliegenden Wänden, die sich auf Seiten der äußeren Hülle (1) befinden, rollen können, wobei die Wände zusammen eine Rollführung definieren, **dadurch gekennzeichnet, dass** eine der zwei Wände, die mit n Reihen benachbarter Kugeln (7) aus verschiedenen Paaren zusammenwirkt, zu einem Teil (4, 4', 4") gehört, wovon wenigstens ein Abschnitt aus einem elastischen Werkstoff besteht, wobei das Teil (4, 4', 4") mit der äußeren röhrenförmigen Hülle (1) fest verbunden ist und der elastische Werkstoff die n Reihen von Kugeln gegen das Innenrohr (3) drängt.

2. System zur teleskopischen Führung eines Innenrohrs (3) in einer äußeren röhrenförmigen Hülle (1) nach dem vorhergehenden Anspruch, **dadurch gekennzeichnet, dass** das elastische Teil eine elastomere Platte (4) ist.

3. System zur teleskopischen Führung eines Innenrohrs (3) in einer äußeren röhrenförmigen Hülle (1) nach Anspruch 1, **dadurch gekennzeichnet, dass** das Teil ein Profilelement (4') mit Blattfedern (10, 10') ist, wobei die Kugeln (7) in Kontakt mit diesen angeordnet sind.

4. System zur teleskopischen Führung eines Innenrohrs (3) in einer äußeren röhrenförmigen Hülle (1) nach Anspruch 3, **dadurch gekennzeichnet, dass** das Profilelement (4') aus Federstahl besteht.

5. System zur teleskopischen Führung eines Innenrohrs (3) in einer äußeren röhrenförmigen Hülle (1) nach Anspruch 1, **dadurch gekennzeichnet, dass** das Teil ein nicht elastisches Abstützorgan (12) für jene Kugeln aufweist, die mit einer elastischen Platte (4") zusammenwirken, die in Kontakt mit der äußeren röhrenförmigen Hülle (1) angeordnet ist.

6. System zur teleskopischen Führung eines Innenrohrs (3) in einer äußeren röhrenförmigen Hülle (1) nach Anspruch 5, **dadurch gekennzeichnet, dass** die elastische Platte (4") aus einem Elastomer besteht.

7. System zur teleskopischen Führung eines Innenrohrs in einer äußeren röhrenförmigen Hülle (1) nach einem der vorhergehenden Ansprüche, **dadurch gekennzeichnet, dass** der Käfig (8) vier axiale Reihen von Kugeln (7) aufweist, die in Kontakt mit dem Innenrohr (3) angeordnet sind.

8. System zur teleskopischen Führung eines Innenrohrs (3) in einer äußeren röhrenförmigen Hülle (1) nach einem der vorhergehenden Ansprüche, **dadurch gekennzeichnet, dass** das Innenrohr (3) einen ovalen Verlauf hat.

9. Anwendung eines Führungssystems nach einem der vorhergehenden Ansprüche auf ein Fußgestell eines tischartigen Möbelstücks.

## Claims

1. System for telescopic guiding of an inner tube (3) in an outer tubular envelope (1), comprising rows of balls (7) which are disposed in at least one cage (8) parallel to the axis of sliding, the said rows exerting opposing actions by groups in n pairs, through which there passes a single vertical median plane which passes through the axis of sliding, the said balls (7) being able to roll on the outer wall of the inner tube (3) and on two opposite walls situated on the outer envelope (1) side, the said walls defining together a rolling duct, **characterised in that** one of the two walls, which co-operates with n adjacent rows of balls (7) obtained from distinct pairs, belongs to a part (4, 4',4"), at least one portion of which is made of resilient material, the said part (4, 4', 4") being integral with the outer tubular envelope (1) and the resilient material pressing the said n rows of balls towards the inner tube (3).

2. System according to the preceding claim, for telescopic guiding of an inner tube (3) in an outer tubular envelope (1), **characterised in that** the resilient part is an elastomer sheet (4).

3. System according to claim 1, for telescopic guiding of an inner tube (3) in an outer tubular envelope (1), **characterised in that** the part is a profile (4') with spring leaves (10, 10'), in contact with which the balls (7) are disposed.

4. System according to claim 3, for telescopic guiding of an inner tube (3) in an outer tubular envelope (1), **characterised in that** the profile (4') is made of sprung steel.

5. System according to claim 1, for telescopic guiding of an inner tube (3) in an outer tubular envelope (1), **characterised in that** the said part comprises a non-resilient support unit (12) for the balls, which co-operates with a resilient sheet (4") placed in contact with the outer tubular envelope (1).

6. System according to claim 5, for telescopic guiding of an inner tube (3) in an outer tubular envelope (1), **characterised in that** the resilient sheet (4") is made of elastomer.

7. System according to one of the preceding claims, for telescopic guiding of an inner tube (3) in an outer tubular envelope (1), **characterised in that** the cage (8) comprises four axial rows of balls (7) disposed in contact with the inner tube (3).

8. System according to one of the preceding claims, for telescopic guiding of an inner tube (3) in an outer tubular envelope (1), **characterised in that** the inner tube (3) has an oval shape.

9. Use of a guiding system according to the preceding claims, for a leg for furniture of a table type.
